# FASCICULE DE BREVET EUROPEEN

(11) **EP 1 794 041 B1**
(45) Date de publication et mention de la délivrance du brevet: **03.09.2008**
(21) Numéro de dépôt: 05800630.5
(22) Date de dépôt: 26.09.2005
(51) Int. Cl.: B60S 1/50

(54) **DISPOSITIF DE RECHAUFFAGE DE L'EAU DES LAVE-VITRES D'UN VEHICULE AUTOMOBILE**
VORRICHTUNG ZUR WIEDERAUFWÄRMUNG DES WASSERS EINER SCHEIBENWASCHANLAGE EINES KRAFTFAHRZEUGS
DEVICE FOR REHEATING THE WATER OF THE WINDSCREEN WASHERS OF A MOTOR VEHICLE

(30) Priorité: 30.09.2004 FR 0452200
(43) Date de publication de la demande: 13.06.2007
(73) Titulaire: PEUGEOT CITROËN AUTOMOBILES S.A., 78140 Vélizy Villacoublay (FR)
(72) Inventeur: JEUFFE, Gérard, F-78810 Feucherolles (FR)
(86) Numéro de dépôt international: PCT/FR2005/050780
(87) Numéro de publication internationale: WO 2006/035179

(56) Documents cités:
- DE-A1- 3 704 325
- DE-A1- 10 213 062

## Description

La présente invention est relative à un dispositif de réchauffage de l'eau des lave-vitres d'un véhicule automobile à partir des calories provenant de la boîte de dégazage du circuit de refroidissement de ce véhicule. Un dispositif de réchauffage de l'eau des lave-vitres d'un véhicule automobile selon le préambule de la revendication 1 est décrit dans le document DE-A- 3704325.

On sait que le refroidissement du moteur et de divers accessoires directement liés à celui-ci s'effectue, dans un véhicule automobile, au moyen d'un circuit de refroidissement rempli d'un liquide approprié, usuellement de l'eau additionnée d'un produit propre à limiter dans une certaine mesure sa vaporisation, ce circuit traversant notamment la culasse du moteur par des tubulures où l'eau est admise sous pression depuis une pompe de circulation, des piquages et canalisations de liaison mettant ce circuit en communication avec un radiateur devant lequel tourne un ventilateur dont la mise en route est commandée dès que la température dans le circuit atteint un seuil prédéterminé.

Sur ce circuit de refroidissement, présent sur tout véhicule automobile, il est nécessaire de prévoir un volume libre en communication avec lui, confiné dans un ensemble clos, qu'il est convenu d'appeler « boîte de dégazage » et dont le rôle est d'assurer la séparation du liquide et de sa vapeur, le cas échéant de la fraction des gaz de combustion et de l'air extérieur qui se sont introduits dans le circuit lors du fonctionnement du moteur ou à l'occasion du remplissage de ce circuit avec le liquide qu'il contient.

Cette boîte de dégazage assure une fonction essentielle pour la régulation et la mise en sécurité du circuit de refroidissement, en particulier en abaissant le niveau de gaz contenu dans ce circuit à une valeur limite fixée par le tarage correspondant d'une soupape d'échappement, la présence d'une quantité de gaz trop importante pouvant avoir des conséquences graves sur le fonctionnement satisfaisant du circuit , comme par exemple conduire à désamorcer la pompe de circulation, à endommager la culasse du moteur en cas de refroidissement insuffisant, plus encore, si la circulation du liquide n'atteint pas un débit approprié, à créer des phénomènes de cavitation qui peuvent dégrader certaines pièces essentielles, ou enfin à accroître les rejets d'eau vers l'extérieur par un orifice de trop plein prévu sur le circuit, ces divers effets étant la conséquence d'une présence de gaz excessive.

Le rôle déterminant de la boîte de dégazage exige cependant, pour que celle-ci atteigne l'efficacité requise, non seulement qu'elle soit localisée avec précision au-dessus du niveau de la culasse et du radiateur, mais encore que la montée en température du liquide dans le circuit de refroidissement soit relativement rapide, de l'ordre de 15 minutes pour atteindre 60° dans un moteur diesel, également de 60° mais en 5 minutes pour un moteur à essence, avec un volume de liquide généralement compris entre 1,5 et 2 litres, et que cette température soit en permanence maintenue au voisinage immédiate de ces niveaux sans à coups notables.

En particulier, il s'avère que si, en fonctionnement, se produit une perte sensible et brutale de calories au niveau de la boîte de dégazage, conduisant à une baisse de pression dans le circuit et à un accroissement corrélatif de la vaporisation du liquide, les inconvénients précités qui apparaissent immédiatement, risquent de provoquer un refroidissement insuffisant de la culasse et des autres parties du véhicule intéressées par le circuit, avec le risque maximal de provoquer la rupture du moteur et l'immobilisation immédiate du véhicule, entraînant des coûts de réparation excessifs.

On conçoit par ailleurs que, pour remédier à un tout autre problème, à savoir le lavage optimal des vitres du pare-brise avant et/ou de la lunette arrière du véhicule, le cas échéant pour nettoyer les projecteurs avant, au moyen d'une projection d'eau sous pression sur les surfaces vitrées correspondantes au moyen de gicleurs ou autres organes similaires, coopérant avec des balais d'essuie-glace ou éléments de raclage analogues, il soit particulièrement intéressant que l'eau utilisée, stockée dans un ou plusieurs réservoirs logés à l'intérieur de la carrosserie du véhicule, notamment dans le compartiment du moteur au voisinage de la boîte de dégazage du circuit de refroidissement, soit portée à une certaine température, l'eau chaude ayant évidemment un meilleur pouvoir de nettoyage des vitres, en aidant à mieux décoller et éliminer les diverses salissures qui s'y sont déposées.

Une solution classique peut consister, pour satisfaire à cette dernière amélioration, à prévoir dans le réservoir d'eau du lave-vitre, une résistance chauffante, mise sous tension de manière automatique ou par commande du conducteur lui-même qui dispose par exemple sur son tableau de bord d'un bouton approprié.

Mais cette solution de réchauffage de l'eau d'un réservoir de lave-vitre par une commande spécialisée, outre qu'elle n'est pas pratique, présente un grave inconvénient consistant dans une consommation d'énergie élevée et par suite, à performances égales du véhicule, à un accroissement non négligeable du volume de carburant nécessaire pour produire celle-ci.

La présente invention vise à pallier cet inconvénient en prélevant les calories nécessaires à l'élévation de la température de l'eau de lavage des vitres d'un véhicule automobile contenue dans un réservoir logé dans le compartiment moteur de ce véhicule à partir de la boîte de dégazage de son circuit de refroidissement, ce prélèvement s'effectuant dans des conditions particulières évitant que la température propre de cette boîte ne subisse des variations brusques, avec les risques pouvant en découler sur le bon fonctionnement du moteur

A cet effet, le dispositif considéré, comportant, montés dans son compartiment moteur, d'une part une boîte de dégazage sous pression, faisant partie du circuit de refroidissement du moteur, et d'autre part au moins un réservoir d'eau de lavage, ce réservoir étant associé à une pompe de circulation prélevant l'eau dans celui-ci et la délivrant à des gicleurs de distribution et de répartition sur ces vitres, se caractérise en ce que le réservoir entoure au moins partiellement la boîte de dégazage en ménageant entre eux un espace de séparation d'épaisseur déterminée, et en ce que dans cet espace, est intégré un corps creux à double cloison, délimitant un volume isolant thermique, fermé sur lui-même.

La présence de ce corps creux faisant fonction d'isolant thermique, disposé entre la boîte de dégazage et le réservoir de liquide de lavage, limite très sensiblement la vitesse avec laquelle s'effectue le transfert des calories de cette boîte vers le réservoir de sorte que le circuit de refroidissement dans lequel est montée cette boîte ne subit aucun choc thermique brutal, le transfert des calories de la boîte vers le réservoir étant progressif et continu.

De préférence, le corps creux isolant thermique, fermé sur lui-même, logé dans l'espace intermédiaire, constitue une enceinte placée sous vide.

Selon une autre caractéristique, le corps creux isolant thermique entoure la boîte de dégazage sur une partie seulement de sa surface externe afin de laisser visible un niveau porté par la boîte pour contrôler en permanence la quantité de liquide contenue dans celle-ci.

Avantageusement, des piquages de liaison entre la boîte de dégazage et le circuit de refroidissement sont prévus à l'extérieur du corps creux.

Selon une autre caractéristique de l'invention, le réservoir de liquide d'eau de lavage comporte intérieurement au moins une cloison de séparation partielle du volume liquide qu'il contient, cette cloison délimitant une chambre interne de régulation où l'eau est la plus proche du corps creux et par suite portée à la température la plus élevée, cette région comprenant un orifice de sortie du réservoir en communication avec la pompe de circulation prélevant cette eau dans le réservoir et la renvoyant aux gicleurs.

D'autres caractéristiques d'un dispositif de réchauffage de l'eau du réservoir des lave-vitres d'un véhicule automobile, établi conformément à l'invention, apparaîtront encore à travers la description qui suit d'un exemple de réalisation donné à titre indicatif et non limitatif, en référence aux dessins annexés sur lesquels :
- La Figure 1 est une vue schématique en coupe transversale du dispositif considéré.
- La Figure 2 est une vue en perspective et du dessus du dispositif de la Figure 1, illustrant divers accessoires complémentaires.
- Les Figures 3a, 3b, 3c sont des vues de détail de la boîte de dégazage et du réservoir d'eau associé, avec les moyens prévus dans ce réservoir pour le prélèvement de l'eau présentant la température la plus élevée.

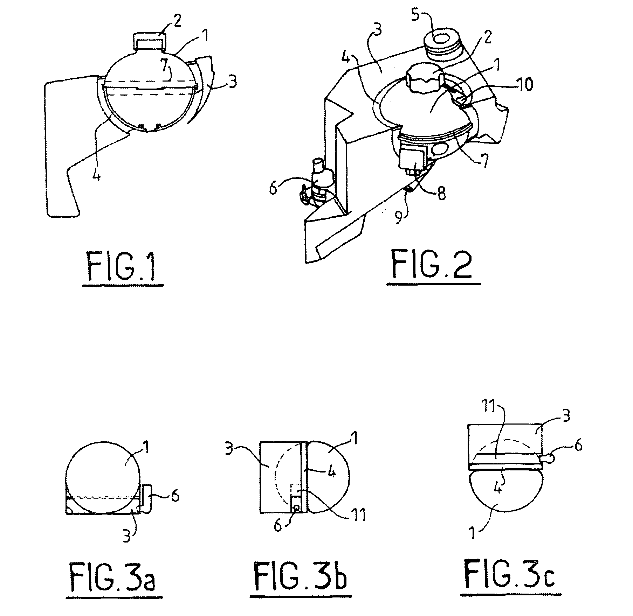

Sur les Figures 1 et 2, la référence 1 désigne la boîte de dégazage du circuit de refroidissement (non représenté) d'un véhicule automobile, le détail de la réalisation de ce circuit, en particulier de ses tubulures de circulation dans la culasse du moteur et de liaison avec le radiateur, n'important pas directement à l'invention et n'étant donc pas décrit ici.

La boîte de dégazage 1 comporte un bouchon amovible 2, pour permettre le remplissage de ce circuit de refroidissement avec un liquide approprié à cet usage, généralement constitué par de l'eau à laquelle est ajouté en proportions convenables un additif, en lui-même connu dans la technique, propre à réduire la tension superficielle du liquide et à limiter sa vaporisation lors du fonctionnement du moteur.

La boîte de dégazage remplie du liquide du circuit surmonté d'une quantité résiduelle de gaz provenant, soit d'une fraction vaporisée du liquide dans le circuit lui-même, soit de la combustion du carburant dans le moteur, soit encore de l'air extérieur emprisonné dans le circuit lors de son remplissage, comporte de façon classique une soupape de sécurité (non représentée), le circuit étant muni d'un orifice de trop plein limitant la quantité de liquide enfermée dans celui-ci à l'occasion de sa mise à niveau initiale ou de son ajustement ultérieur, le volume de ce liquide étant évidemment variable d'un véhicule à l'autre, mais généralement de l'ordre de 1,5 à 2 litres.

Selon l'invention, la boîte de dégazage 1 est entourée par un réservoir 3, destiné à contenir le volume d'eau nécessaire à l'utilisation des lave-vitres du véhicule, notamment de son pare-brise avant et également de sa lunette arrière, le cas échéant, sur certaines voitures dites de haut de gamme, de systèmes de balayage des projecteurs des phares avant.

Ce réservoir 3, dont la structure particulière est également indifférente à l'invention, généralement dictée par la place disponible pour son logement dans le compartiment moteur, le volume d'eau qu'il contient pouvant à titre indicatif varier entre 1,5 et 8 litres selon le véhicule, est réalisé de telle sorte qu'il entoure, au moins partiellement, la boîte de dégazage 1, en laissant libre entre eux un espace intermédiaire, lequel est de préférence confiné dans un corps creux étanche 4, à double cloison.

Le corps 4 est avantageusement placé sous vide, pour former un écran thermique entre la boîte de dégazage 1 formant vase d'expansion et le réservoir 3, de sorte que le transfert des calories entre le liquide contenu dans le circuit de refroidissement à l'intérieur de la boîte et l'eau dans le réservoir s'effectue de façon très progressive et sans à coups, notamment en ne prélevant ces calories qu'à partir d'une certaine température et en évitant de brusques variations de celle-ci dans la boîte avec les effets négatifs sur le fonctionnement du moteur explicités précédemment.

Sur la Figure 2, le dispositif associant selon l'invention la boîte de dégazage 1 et le réservoir d'eau de lavage 3, avec interposition du corps creux isolant 4 entre eux, est illustré avec plus de détails, la référence 5 désignant le bouchon servant à obturer le réservoir 3 et, lorsqu'il est retiré, à le remplir jusqu'à un niveau approprié.

La référence 6 désigne la pompe de circulation reliée à ce réservoir pour prélever l'eau dans celui-ci et la transmettre sous pression aux gicleurs des divers lave-vitres du véhicule.

Sur cette figure, la boîte de dégazage 1 comporte une zone intermédiaire 7, de préférence transparente, permettant à tout instant de contrôler le niveau du liquide dans la boîte entre deux repères délimitant respectivement un maximum et un minimum.

La boîte 1 comporte également un détecteur 8, repérant le niveau par rapport à sa valeur minimale, permettant d'avertir l'utilisateur d'un remplissage insuffisant et de la nécessité d'ajouter du liquide dans le circuit de refroidissement. Sur cette figure, sont également schématiquement représentés des piquages 9 et 10 par lesquels la boîte 1 est raccordée à ce circuit.

Sur les Figures 3a, 3b, 3c, on retrouve la boîte de dégazage 1, le réservoir de liquide des lave-vitres 3 et le corps creux 4 logé dans l'espace intermédiaire séparant ces deux éléments. La pompe de circulation 6 est de même schématiquement représentée.

Sur ces figures, on voit également que le réservoir 3 peut comporter intérieurement une chambre intermédiaire 11, située au plus près du corps creux 4, de manière à ce que l'eau contenue dans cette chambre soit plus rapidement mise en température que celle qui occupe le reste du réservoir, la pompe de circulation prélevant avantageusement l'eau dans cette chambre 11 où elle est à température légèrement plus élevée.

On réalise ainsi une association simple entre la boîte de dégazage du circuit de refroidissement et le réservoir de l'eau de lavage fournie sous pression et à une certaine température aux gicleurs et autres balais d'essuyage, améliorant l'efficacité et le fonctionnement de ces derniers.

Cette association n'implique aucune contrainte sur le positionnement de la boîte de dégazage vis-à-vis du circuit de refroidissement auquel elle est raccordée, en étant nécessairement localisée au-dessus des tubulures de circulation qui traversent la culasse du moteur et des canalisations de liaison avec le radiateur.

De même, aucune sujétion n'est imposée quant à la structure propre du réservoir d'eau de lavage, qui peut être réalisée en un matériau plastique approprié ou différemment, ce réservoir pouvant être compartimenté ou non, selon ses divers usages.

Bien entendu, il va de soi que l'invention ne se limite pas aux exemples de réalisation plus spécialement décrits et représentés ; elle en embrasse au contraire toutes les variantes.

## Revendications

1. - Dispositif de réchauffage de l'eau des lave-vitres d'un véhicule automobile comportant, montés dans son compartiment moteur, d'une part une boîte de dégazage sous pression (1) faisant partie du circuit de refroidissement du moteur, et d'autre part au moins un réservoir (3) d'eau de lavage, ce réservoir étant associé à une pompe de circulation (6) prélevant l'eau dans celui-ci et la délivrant à des gicleurs de distribution et de répartition sur ces vitres, **caractérisé en ce que** le réservoir (3) entoure au moins partiellement la boîte de dégazage (1) en ménageant entre eux un espace de séparation d'épaisseur déterminée, et **en ce que** dans cet espace, est intégré un corps creux (4) à double cloison, délimitant un volume isolant thermique, fermé sur lui-même.

2. - Dispositif selon la revendication 1, **caractérisé en ce que** le corps creux (4) isolant thermique, fermé sur lui-même, logé dans l'espace intermédiaire, constitue une enceinte placée sous vide.

3. - Dispositif selon l'une des revendications 1 ou 2, **caractérisé en ce que** le corps creux (4) isolant thermique entoure la boîte de dégazage (1) sur une partie seulement se sa surface externe afin de laisser visible un niveau (7) porté par la boîte de dégazage (1) pour contrôler en permanence la quantité de liquide contenue dans celle-ci.

4. - Dispositif selon l'une quelconque des revendications 1 à 3, **caractérisé en ce que** des piquages de liaison (9,10) entre la boîte de dégazage (1) et le circuit de refroidissement sont prévus à l'extérieur du corps creux (4).

5. - Dispositif selon l'une quelconque des revendications 1 à 4, **caractérisé en ce que** le réservoir (3) comporte au moins une cloison de séparation partielle du volume liquide qu'il contient, cette cloison délimitant une chambre interne (11) de régulation dans laquelle l'eau est la plus chaude, où la pompe de circulation (6) prélève cette eau et la renvoie aux gicleurs.

## Claims

1. Device for heating the screen-wash water of a motor vehicle comprising, mounted in its engine compartment, firstly, a pressurized degassing tank (1) that form part of the engine cooling circuit, and secondly, at least one screen wash reservoir (3), this reservoir being associated with a circulation pump (6) drawing water from this reservoir and delivering it to nozzles that distribute and spread the water over these screens, **characterized in that** the reservoir (3) at least partially surrounds the degassing tank (1), a space of determined thickness being left between these, and **in that** a double-walled hollow body (4) defining a heat-insulated volume closed on itself is built in to this space.

2. Device according to Claim 1, **characterized in that** the heat-insulating hollow body (4) that is closed on itself, housed in the intermediate space, constitutes an enclosed space placed under vacuum.

3. Device according to one of Claims 1 and 2, **characterized in that** the thermally insulating hollow body (4) surrounds the degassing tank (1) over just part of its external surface so as to leave a level indicator (7) borne by the degassing tank (1) visible so that the amount of liquid contained in this tank can always be checked.

4. Device according to any one of Claims 1 to 3, **characterized in that** tappings (9, 10) connecting the degassing tank (1) and the cooling circuit are provided on the outside of the hollow body (4).

5. Device according to any one of Claims 1 to 4, **characterized in that** the reservoir (3) comprises at least one dividing wall partially dividing the liquid volume that it contains, this wall delimiting an internal regulating chamber (11) in which the water is hottest, from where the circulation pump (6) draws this water and dispatches it to the nozzles.

## Patentansprüche

1. Anwärmvorrichtung für das Scheibenwaschwasser eines Kraftfahrzeugs, das montiert in seinem Motorraum einerseits einen unter Druck stehenden Entlüftungsbehälter (1), der einen Teil des Kühlkreises des Motors bildet, und andererseits wenigstens einen Waschwasser-Vorratsbehälter (3) enthält, wobei diesem Vorratsbehälter eine Förderpumpe (6) zugeordnet ist, die Wasser aus ihm ansaugt und es an Versorgungsspritzdüsen fördert, um es auf diese Scheiben zu verteilen, **dadurch gekennzeichnet, dass** der Vorratsbehälter (3) wenigstens teilweise den Entlüftungsbehälter (1) umgibt, indem zwischen ihnen ein Trennzwischenraum mit bestimmter Dicke gebildet ist, und dass in diesen Zwischenraum ein Hohlkörper (4) mit Doppelwand integriert ist, der ein wärmeisolierendes Volumen begrenzt und geschlossen ist.

2. Vorrichtung nach Anspruch 1, **dadurch gekennzeichnet, dass** der wärmeisolierende Hohlkörper (4), der geschlossen ist und sich in dem Zwischenraum befindet, durch einen mit Unterdruck beaufschlagten Behälter gebildet ist.

3. Vorrichtung nach einem der Ansprüche 1 oder 2, **dadurch gekennzeichnet, dass** der wärmeisolierende Hohlkörper (4) den Entlüftungsbehälter (1) nur an einem Teil seiner äußeren Oberfläche umgibt, um einen Pegel (7), der in dem Entlüftungsbehälter (1) vorhanden ist, sichtbar zu machen, um die in ihm enthaltene Flüssigkeitsmenge ständig kontrollieren zu können.

4. Vorrichtung nach einem der Ansprüche 1 bis 3, **dadurch gekennzeichnet, dass** zwischen dem Entlüftungsbehälter (1) und dem Kühlkreis außerhalb des Hohlkörpers (4) Verbindungsstutzen (9, 10) vorgesehen sind.

5. Vorrichtung nach einem der Ansprüche 1 bis 4, **dadurch gekennzeichnet, dass** der Vorratsbehälter (3) wenigstens eine Wand zur teilweisen Abtrennung des Flüssigkeitsvolumens, das er enthält, aufweist, wobei diese Wand eine Regulierungsinnenkammer (11) begrenzt, in der das Wasser am heißesten ist und wo die Förderpumpe (6) dieses Wasser ansaugt und es zu den Spritzdüsen schickt.
